# FASCICULE DE BREVET EUROPEEN

(11) **EP 1 537 981 B1**
(45) Date de publication et mention de la délivrance du brevet: **06.09.2006**
(21) Numéro de dépôt: 04105967.6
(22) Date de dépôt: 22.11.2004
(51) Int. Cl.: B29C 70/46, B29C 70/34, B29D 24/00

(54) **Procédé de mise en place des éléments d'un panneau auto-raidi en composite pré-imprégné**
Verfahren zum Auflegen von Prepregteile für eine selbstverstärkte Platte
Method for layup of prepreg elements for a self-reinforced panel

(30) Priorité: 04.12.2003 FR 0314253
(43) Date de publication de la demande: 08.06.2005
(73) Titulaire: AIRBUS France, 31060 Toulouse (FR)
(72) Inventeur: NAVAS, Georges, 44700, ORVAULT (FR); PETETIN, Jean-Paul, 31770, COLOMIERS (FR); FONTAYNE, Michel, 31490, BRAX (FR); LAFON, Pierre, 31500, TOULOUSE (FR); HELLARD, Guy, 31700, BLAGNAC (FR)
(74) Mandataire: Schmit, Christian Norbert Marie

(56) Documents cités:
- GB-A- 2 105 254
- US-A- 5 538 589

## Description

La présente invention se rapporte à la fabrication de panneaux auto-raidis constitués à partir de nappes de fibres pré-imprégnées et destinées notamment à la réalisation de panneaux de voilure et de caissons de fuselage par exemple.

Plus précisément, les panneaux auto-raidis visés par l'invention sont constitués d'une peau formée généralement d'une pluralité de plis superposés de fibres de carbone pré-imprégnées, sur l'une des faces de laquelle sont rapportés et disposés côte à côte des raidisseurs en forme de U dont les parties de liaison des branches du U sont plaquées contre ladite peau, avec interposition, entre les branches en regard de deux raidisseurs adjacents, d'une structure d'interfaçage communément appelée « clou », complétée par une « tête de clou » constituée par un cordon de résine de remplissage.

L'invention concerne la fabrication de ce type de panneau auto-raidi comme décrit dans le document US-A- 5538589 et le préambule de la revendication 1 et plus particulièrement les étapes de mise en place des éléments de tels panneaux lors de leur fabrication.

A cet effet, l'invention a pour objet un procédé de mise en place des éléments d'un panneau auto-raidi en composite pré-imprégné, du type constitué d'une peau de base sur l'une des faces de laquelle sont rapportés et disposés côte à côte des raidisseurs en forme de U dont les parties de liaison des branches du U sont plaquées contre ladite peau, avec interposition, entre les branches en regard de deux raidisseurs adjacents, d'une structure d'interfaçage communément appelée « clou », complétée par une « tête de Clou » constituée par un cordon de résine de remplissage, caractérisé par les étapes suivantes :
- drapage d'une pluralité de plis superposés de fibres de carbone pré-imprégnées pour constituer ladite peau de base ;
- mise en place et formage sur des poinçons individuels à section en U et arêtes arrondies et de longueur correspondant à celle des raidisseurs en U du panneau à réaliser, d'au moins un pli de renfort en fibres de carbone pré-imprégnées ;
- réalisation par drapage d'au moins un pli de fibres de carbone pré-imprégnées de demi-clous constitués d'une bande de longueur correspondant à celle des raidisseurs en U et de largeur égale à la hauteur des branches dudit U et présentant un bord longitudinal tombé ;
- mise en place sur les deux flancs de chaque poinçon revêtu dudit pli de renfort et en position de U renversé, d'un demi-clou, les bords tombés étant placés à hauteur des arêtes arrondies des poinçons ;
- positionnement côte à côte des poinçons en position de U renversé et mise en place d'une tête de clou de section sensiblement triangulaire entre deux bords tombés en regard ;
- compactage de l'ensemble des poinçons ainsi accotés ;
- retournement à 180° de l'ensemble des poinçons compactés ;
- positionnement de cet ensemble sur ladite peau de base en sorte de plaquer contre cette dernière une surface plane continue définie, d'une part, par la face externe des parties de liaison des branches des U des plis de renfort et, d'autre part, par l'ensemble « clou + tête de clou» » séparant deux raidisseurs en U adjacents ;
- et, enfin, retrait desdits poinçons en U.

Suivant un mode particulier de mise en oeuvre, l'étape de réalisation des demi-clous consiste à mettre en place et plaquer contre un poinçon à section en U à arêtes arrondies ladite bande en sorte que les deux bords longitudinaux opposés de cette dernière soient en léger débordement du poinçon, puis à découper la bande suivant son axe longitudinal en sorte d'obtenir deux demi-clous symétriques.

On va maintenant décrire plus en détail le mode de mise en oeuvre préféré du procédé selon l'invention en se reportant aux dessins annexés sur lesquels:
- figure 1 est une vue en coupe transversale partielle d'un panneau auto-raidi à raidisseurs en U rapportés sur une peau de base ;
- figure 2 illustre la mise en place d'un pli sur un poinçon à section en U ;
- figure 3 représente le poinçon de la figure 2 revêtu du pli de renfort en U et flanqué latéralement de deux demi-clous;
- figure 4 représente quatre poinçons en U selon la figure 3, accolés en vue de la mise en place des têtes de clou ;
- figures 5, 6 et 7 illustrent un mode de réalisation des demi-clous, et
- figures 8, 9 et 10 illustrent les étapes finales de mise en place d'un ensemble raidisseurs-clous-tête de clou sur une peau de base et de retrait des poinçons.

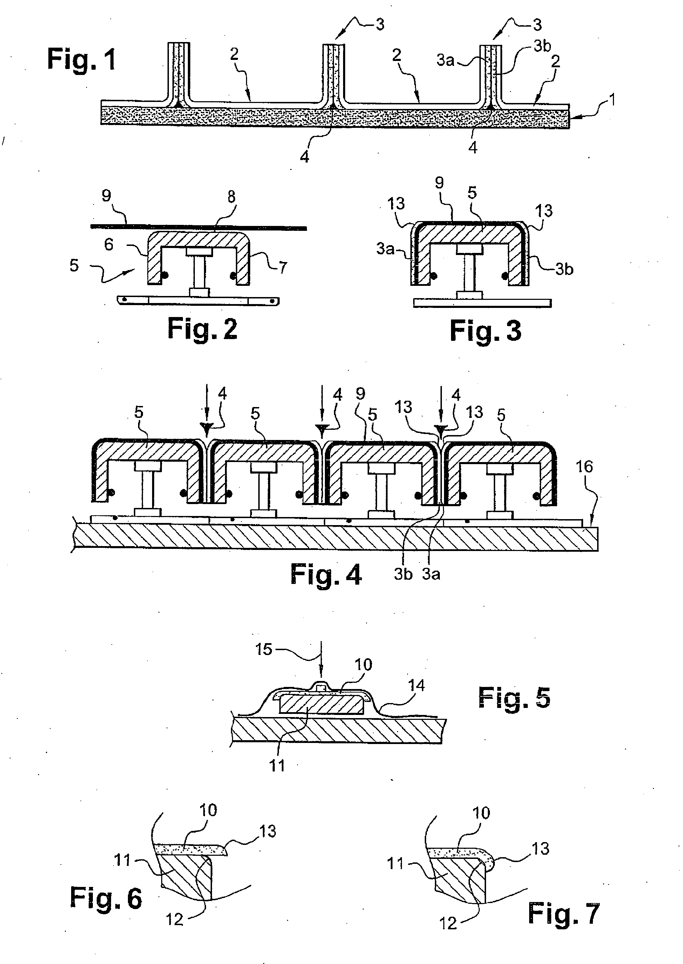

Sur la figure 1 on a représenté en coupe transversale un panneau auto-raidi en composite pré-imprégné constitué d'une peau de base 1 sur l'une des faces de laquelle sont rapportés des raidisseurs 2 en forme de U disposés côte à côte parallèlement et séparés entre eux par une structure d'interfaçage comprenant un clou 3 et une tête de clou 4, le clou étant formé de deux demi-clous 3a, 3b disposés symétriquement, la tête de clou 4 comblant l'espace subsistant entre la peau 1, d'une part, et les bords en regard des demi-clous 3a, 3b, d'autre part.

La peau 1 , de même que les raidisseurs 2 en forme de U et les demi-clous 3a, 3b sont constitués d'un empilement de plis formés de tissus ou nappes de fibres de carbone pré-imprégnées d'une résine appropriée.

Les raidisseurs 2, les demi-clous 3a, 3b et les têtes de clou 4 courent généralement sur toute la longueur du panneau.

La figure 2 illustre la première étape de mise en place des éléments de renfort du panneau, la peau de base 1 étant réalisée par ailleurs suivant la technique conventionnelle du drapage.

Sur la figure 2 on a représenté en 5 un poinçon dont la section est en forme de U définissant trois surfaces externes planes orthogonales ou parallèles entre elles, respectivement des surfaces 6 et 7 correspondant aux deux branches parallèles du U et une surface 8 de liaison.

Le poinçon 5 présente une longueur au moins égale à celle des raidisseurs 2 à réaliser et est placé dans la position renversée du U pour la mise en place des plis superposés en forme de bandes rectangulaires devant constituer les raidisseurs.

En 9 est représenté en coupe transversale un tel empilement réalisé par drapage et formant une bande de longueur égale à celle du raidisseur en U à obtenir.

Sur le poinçon 5, préalablement revêtu d'un film de polyéthylène (non représenté) pour éviter le collage de la bande 9 et permettre le retrait ultérieur du poinçon, la bande 9 est posée à cheval comme illustrée, en sorte de former sous infra-rouge le raidisseur en U en plaquant les bords de la bande 9 sur les flancs 6, 7 du poinçon, les bords longitudinaux de la bande 9 étant recoupés à la hauteur desdits flancs 6, 7.

La figure 3 illustre l'étape suivante de mise en place sur les deux flancs du poinçon 5 ainsi revêtu de la bande 9, d'un demi-clou 3a, 3b, préalablement mis en forme et découpé.

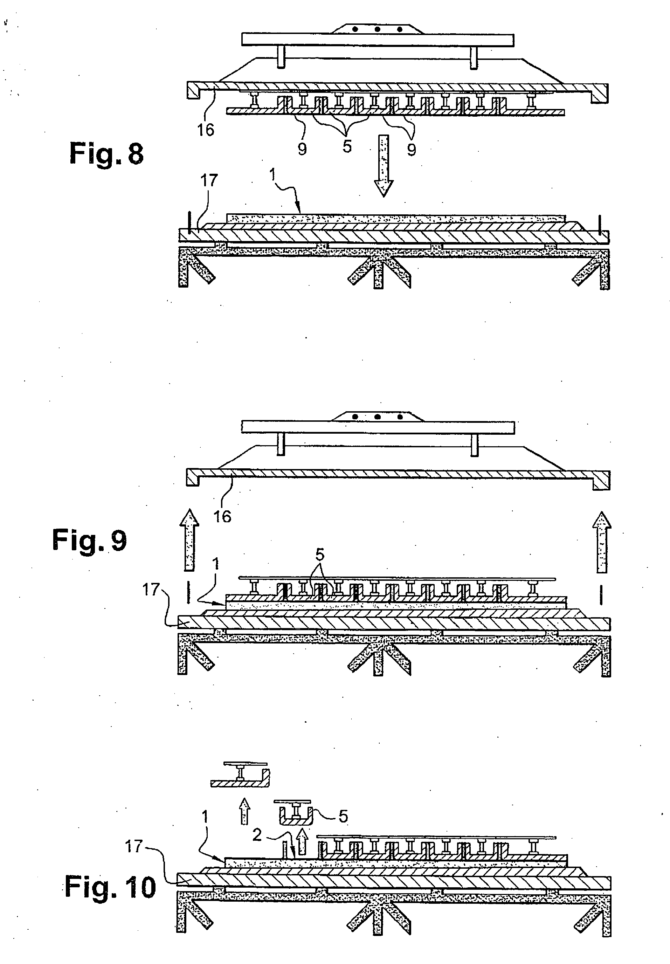

Suivant un mode de réalisation préféré illustré par les figures 5 à 7, les deux demi-clous 3a, 3b sont obtenus à partir d'une même bande 10 placée sur un conformateur 11 de section rectangulaire et à arêtes supérieures 12 arrondies (figures 6, 7), les bords longitudinaux 13 de la bande étant en léger débordement (figure 6).

Ensuite, une vessie 14 est placée sur l'ensemble et le vide est fait pour former les demi-clous, c'est-à-dire plaquer (figure 7) les bords 13 de la bande 10 sur les arêtes arrondies 12, après quoi la bande 10 est découpée suivant son axe longitudinal (flèche 15) pour séparer les deux demi-clous 3a, 3b.

L'étape suivante consiste à disposer comme illustré par la figure 4 plusieurs poinçons selon la figure 3, parallèlement et côte à côte, toujours dans la position du U renversé, afin de mettre en place entre deux poinçons adjacents, une tête de clou 4 préparé au préalable et constituée d'un cordon de résine de remplissage de section sensiblement triangulaire, occupant la rigole formée entre les deux bords tombés 13 des demi-clous 3a, 3b plaqués contre la bande 9.

L'ensemble est ensuite mis sous vessie (non représentée) et compacté sous vide afin d'avoir une surface la plus uniformément plane que possible et une absence d'espaces ou interstices vides à hauteur de l'ensemble clou-tête de clou.

L'étape suivante consiste à remettre l'ensemble des poinçons 5 en position normale du U, en retournant de 180°, comme illustré par la figure 8, la plaque 16 de montage des poinçons 5, et en positionnant ces derniers au dessus de la peau de base 1 en place sur son marbre d'attente 17. Puis, l'ensemble des poinçons 5 est déposé sur la peau 1 (figure 9) et, enfin, les poinçons 5 sont enlevés les uns après les autres (figure 10) en sorte d'obtenir une structure d'assemblage selon la figure 1, qu'il conviendra ensuite de consolider en autoclave à la manière habituelle,

## Revendications

1. Procédé de mise en place des éléments d'un panneau auto-raidi en composite pré-imprégné, du type constitué d'une peau de base (1) sur l'une des faces de laquelle sont rapportés et disposés côte à côte des raidisseurs (2) en forme de U dont les parties de liaison des branches du U sont plaquées contre ladite peau, avec interposition, entre les branches en regard de deux raidisseurs (2) adjacents, d'une structure d'interfaçage communément appelée « clou » (3), complétée par une « tête de clou » (4) constituée par un cordon de résine de remplissage, **caractérisé par** les étapes suivantes :
- drapage d'une pluralité de plis superposés de fibres de carbone pré-imprégnées pour constituer ladite peau de base (1);
- mise en place et formage sur des poinçons individuels (5) à section en U et arêtes arrondies et de longueur correspondant à celle des raidisseurs (2) en U du panneau à réaliser, d'au moins un pli de renfort (9) en fibres de carbone pré-imprégnées ;
- réalisation par drapage d'au moins un pli de fibres de carbone pré-imprégnées de demi-clous (3a, 3b) constitués d'une bande (10) de longueur correspondant à celle des raidisseurs (2) en U et de largeur égale à la hauteur des branches dudit U et présentant un bord longitudinal tombé (13) ;
- mise en place sur les deux flancs de chaque poinçon (5) revêtu dudit pli de renfort (9) et en position de U renversé, d'un demi-clou (3a, 3b), les bords tombés (13) étant placés à hauteur des arêtes arrondies des poinçons ;
- positionnement côte à côte des poinçons (5) en position de U renversé et mise en place d'une tête de clou (4) de section sensiblement triangulaire entre deux bords tombés (13) en regard ;
- compactage de l'ensemble des poinçons (5) ainsi accolés ;
- retournement à 180° de l'ensemble des poinçons (5) compactés ;
- positionnement de cet ensemble sur ladite peau de base (1) en sorte de plaquer contre cette dernière une surface plane continue définie, d'une part, par la face externe des parties de liaison des branches des U des plis de renfort (9) et, d'autre part, par l'ensemble « clou (3a, 3b) + tête de clou (4) » séparant deux raidisseurs (2) en U adjacents
- et, enfin, retrait desdits poinçons (5) en U.

2. Procédé suivant la revendication 1, **caractérisé en ce que** l'étape de réalisation des demi-clous (3a, 3b) consiste à mettre en place et plaquer contre un poinçon (11) à section en U à arêtes arrondies (12) ladite bande (10) en sorte que les deux bords longitudinaux opposés (13) de cette dernière soient en léger débordement du poinçon (11), puis à découper la bande (10) suivant son axe longitudinal en sorte d'obtenir deux demi-clous symétriques (3a, 3b).

## Claims

1. A method of laying out elements of a self-stiffened panel made from preimpregnated composite, of the type consisting of a base skin (1) on one of the faces of which there are attached and disposed side by side U-shaped stiffeners (2) of which the connecting parts of the arms of the U are pressed against said skin, with interposition, between the facing arms of two adjacent stiffeners (2), of an interfacing structure commonly referred to as a "stud" (3), supplemented by a "stud head" (4) formed by a bead of filling resin, **characterised by** the following steps:
- draping a plurality of superimposed layers of preimpregnated carbon fibres in order to constitute said base skin (1);
- laying out and forming, on individual posts (5) with a U-shaped cross-section and rounded corners and a length corresponding to that of the U-shaped stiffeners (2) of the panels to be produced, at least one reinforcing layer (9) made from preimpregnated carbon fibres;
- producing, by draping at least one layer of preimpregnated carbon fibres, half-studs (3a, 3b) formed of a strip (10) with a length corresponding to that of the U-shaped stiffeners (2) and a width equal to the height of the arms of said U and having a turned-over longitudinal edge (13);
- laying out, on the two flanks of each post (5) covered with said reinforcing layer (9) and in the position of an inverted U, a half-stud (3a, 3b), the turned-over edges (13) being placed level the rounded corners of the posts;
- positioning side by side the posts (5) in the position of the inverted U and placing a stud head (4) with a substantially triangular cross-section between two facing turned-over edges (13);
- compacting all the posts (5) thus placed side by side;
- turning all the compacted posts (5) through 180°;
- positioning this assembly on said base skin (1) so as to press against the latter a continuous flat surface formed on the one hand by the external face of the connecting parts of the arms of the Us of the reinforcing layers (9) and on the other hand by the assembly of "stud (3a, 3b) + stud head (4)'' separating two adjacent U-shaped stiffeners (2);
- and finally removing said U-shaped posts (5).

2. A method according to claim 1, **characterised in that** the step of producing the half-studs (3a, 3b) consists of placing and pressing the said strip (10) against a post (11) with a U-shaped cross-section and rounded corners (12) so that the two opposite longitudinal edges (13) of said strip project slightly beyond the post (11), and then cutting the strip (10) along its longitudinal axis so as to obtain two symmetrical half-studs (3a, 3b).

## Patentansprüche

1. Verfahren zum Anordnen von Elementen einer vorimprägnierten, selbstversteifenden Verbundplatte des Typs, der aus einer Basislage (1) gebildet ist, wovon auf einer der Flächen nebeneinander U-förmige Versteifungsrippen (2) angefügt und angeordnet sind, wobei die Verbindungsabschnitte der Schenkel des U gegen die Lage gepresst sind, wobei zwischen die Schenkel gegenüber von zwei benachbarten Versteifungsrippen (2) eine Grenzflächenstruktur eingefügt ist, die gewöhnlich "Nagel" (3) genannt wird und durch einen "Nagelkopf' (4) vervollständigt ist, der durch einen ausfüllenden Harzwulst gebildet ist, **gekennzeichnet durch** die folgenden Schritte:
- Ziehen mehrerer übereinander liegender Schichten aus vorimprägnierten Karbonfasern, um die Basislage (1) zu bilden;
- Anordnen und Formen wenigstens einer Verstärkungsschicht (9) aus vorimprägnierten Karbonfasern an einzelnen Stanzstempeln (5) mit U-förmigem Querschnitt und abgerundeten Kanten und einer Länge, die jener der U-förmigen Versteifungsrippen (2) der herzustellenden Tafel entspricht;
- Herstellen von Halbnägeln (3a, 3b), die aus einem Band (10) mit einer Länge, die jener der U-förmigen Versteifungsrippen (2) entspricht, und einer Breite, die gleich der Höhe der Schenkel des U sind, das eine umgebogene Längskante (13) aufweist, gebildet sind, **durch** Ziehen wenigstens einer Schicht aus vorimprägnierten Karbonfasern;
- Anordnen eines Halbnagels (3a, 3b) an den zwei Seitenflächen jedes Stanzstempels (5), der mit der Verstärkungsschicht (9) beschichtet ist und die Orientierung eines umgedrehten U hat, wobei die umgebogenen Kanten (13) auf Höhe der abgerundeten Kanten der Stanzstempel angeordnet sind;
- Positionieren der Stanzstempel (5) in der Position des umgedrehten U nebeneinander und Anordnen eines Nagelkopfes (4) mit im Wesentlichen dreiekkigen Querschnitt zwischen zwei gegenüberliegenden umgebogenen Kanten (13);
- Zusammendrücken der Gesamtheit von auf diese Weise zusammengefügten Stanzstempeln (5);
- Umdrehen der Gesamtheit von zusammengedrückten Stanzstempeln (5) um 180°;
- Positionieren dieser Gesamtheit auf der Basislage (1) in der Weise, dass gegen diese Letztere eine ununterbrochene, ebene Oberfläche gedrückt wird, die einerseits **durch** die äußere Fläche der Verbindungsabschnitte der Schenkel der U der Verstärkungsschichten (9) und andererseits **durch** die Gesamtheit aus "Nagel (3a, 3b) + Nagelkopf (4)", die zwei benachbarte U-förmige Versteifungsrippen (2) trennt, definiert ist;
und schließlich Zurückziehen der U-förmigen Stanzstempel (5).

2. Verfahren nach Anspruch 1, **dadurch gekennzeichnet, dass** der Schritt der Herstellung der Halbnägel (3a, 3b) darin besteht, das Band (10) an dem Stanzstempel (11) mit U-Querschnitt und abgerundeten Kanten (12) anzuordnen und gegen diesen zu drücken, derart, dass die zwei gegenüberliegenden Längskanten (13) dieses Letzteren leicht über den Stanzstempel (11) überstehen, und dann das Band (10) entlang der longitudinalen Achse abzuschneiden, um so zwei symmetrische Halbnägel (3a, 3b) zu erhalten.
